# FASCICULE DE BREVET EUROPEEN

(11) **EP 2 018 918 B1**
(45) Date de publication et mention de la délivrance du brevet: **27.01.2010**
(21) Numéro de dépôt: 08160909.1
(22) Date de dépôt: 22.07.2008
(51) Int. Cl.: B23B 51/00, B23B 51/02

(54) **Foret pour perçage grande vitesse de matériaux composites**
Bohrer zum Hochgeschwindigkeitsbohren von Verbundstoffen
Drill for high-speed perforation of composite materials

(30) Priorité: 26.07.2007 FR 0705457
(43) Date de publication de la demande: 28.01.2009
(73) Titulaire: SNECMA, 75015 Paris (FR)
(72) Inventeur: TURRINI, Claude, 91610, BALLANCOURT (FR)
(74) Mandataire: Boura, Olivier

(56) Documents cités:
- EP-A- 0 477 093
- EP-A- 0 761 352
- WO-A-01/91960
- WO-A-2007/015095
- DE-A1- 10 106 035
- FR-A- 2 861 001
- US-A- 4 529 341

## Description

L'invention concerne un foret tel que décrit dans le préambule de la revendication 1, ainsi qu'un procédé de perçage de matériaux composites au moyen d'un tel foret, tel que décrit dans le préambule de la revendication 12.

Aujourd'hui, les céramiques, du fait de leur dureté importante et de leur grande résistance aux températures élevées, connaissent un développement dans la fabrication des outils de coupe. Les outils de coupe en céramique connus, tels que ceux décrits dans le document de brevet EP 0 477 093 sont généralement des outils de fraisage ou de tournage et permettent d'effectuer des usinages à grande vitesse sur des matériaux de grande dureté. Cependant, les contraintes pouvant s'appliquer sur un foret (profondeur de perçage, évacuation des copeaux, intensité et direction des efforts de coupe) lors d'une opération de perçage sont plus importantes que celles pouvant s'appliquer sur une fraise lors d'une opération de fraisage. Ces contraintes rendent plus difficile la mise en oeuvre de forets céramiques pour effectuer des perçages à très grande vitesse dans des matériaux de grande dureté tels que les superalliages métalliques.

Le brevet FR 2 861 001 apporte une solution à ce problème en proposant un foret céramique dont la géométrie particulière est adaptée au perçage à très grande vitesse dans des matériaux métalliques de grande dureté. Cette géométrie permet de s'affranchir des problèmes liés à la plus faible résistance à la torsion d'un foret céramique par rapport aux forets en acier et d'atteindre des vitesses de coupe périphériques supérieures à 400 mètres/minute, tout en garantissant une durée de vie du foret satisfaisante.

La tendance actuelle, notamment en aéronautique, est au développement de l'emploi de matériaux composites, ce type de matériau étant très intéressant car ayant de bonnes caractéristiques mécaniques, tout en ayant une masse volumique plus faible que les matériaux métalliques.

Le perçage des matériaux composites, et notamment des matériaux composites à fibres de carbone dont la matrice est une résine d'époxy, est à l'heure actuelle réalisé à l'aide de forets monoblocs en carbure de tungstène ou de foret munis d'inserts en diamant polycristallin (ou PCD : polycristal diamond) sur l'arête de coupe. L'utilisation de ces outils permet d'atteindre des vitesses de coupe périphérique comprises entre 20 et 80 mètres/minute par exemple pour les outils en carbure de tungstène. Au-delà de cette plage de vitesses, l'usure de la partie active de l'outil, constituée de carbure de tungstène ou de PCD, est fortement accélérée. En effet, les efforts de coupe, exercés par ces forets sur les pièces à percer, et les frottements entre les surfaces radialement externes des forets et les surfaces cylindriques internes des trous percés, induisent des contraintes thermiques dans les forets et dans les pièces à percer ainsi qu'un phénomène d'abrasion qui provoquent une dégradation accélérée des forets et une déformation des pièces.

En outre, au fur et à mesure que la profondeur des perçages augmente, les efforts de torsion appliqués sur les forets sont de plus en plus importants, d'une part parce que la surface externe du foret frottant contre la surface cylindrique interne du perçage augmente, mais également parce que, pour des grandes vitesses de perçage, le foret doit être capable d'évacuer efficacement une grande quantité de copeaux, ce qui peut provoquer des phénomènes de bourrage dans le foret, augmentant ainsi les efforts de torsion appliqués sur le foret et les risques de cassure de celui-ci.

Par ailleurs, dans le cas d'un perçage, l'arête coupante du foret doit être capable de supporter un gradient de vitesse de coupe important, puisqu'en son centre la vitesse de coupe est nulle et qu'elle augmente progressivement pour atteindre un maximum à la périphérie du foret.

Cette contrainte supplémentaire contribue à l'usure prématurée et à l'augmentation du risque de cassure de l'outil.

Une autre contrainte liée à l'usinage, et en particulier au perçage, de matériaux composites est que l'opération doit être réalisée tout en conservant l'intégrité du matériau percé. Lors d'une opération de perçage, les forets conventionnels exercent des efforts sur la surface cylindrique interne des trous percés globalement dirigés du foret vers le matériau à usiner. Ceci est à l'origine d'un délaminage du matériau, qu'il est absolument nécessaire d'éviter.

Ainsi, bien qu'il existe sur le marché des outils, notamment des forets dont la partie active est en céramique, capables d'usiner à grande vitesse des matériaux de grande dureté tels que des superalliages métalliques, les forets connus de l'art antérieur ne permettent pas d'usiner à grande vitesse et de façon convenable les matériaux composites, en particulier les matériaux composites à fibres de carbone dont la matrice est une résine d'époxy. Par exemple, le foret décrit dans le brevet FR 2 861 001 est bien adapté au perçage grande vitesse des matériaux métalliques de grande dureté, mais ne convient pas aux matériaux composites, provoquant dans ce cas un délaminage du matériau à usiner.

Le but de l'invention est d'éviter les inconvénients précités et d'apporter une solution techniquement simple et peu coûteuse, permettant d'améliorer les performances des forets céramiques et de percer à très grande vitesse des matériaux composites tels que les matériaux composites à fibres de carbone dont la matrice est une résine d'époxy, sans délaminer le matériau, ni élever la température d'usinage au-delà de 200°C, température à partir de laquelle les caractéristiques mécaniques des matériaux composites chutent. Percer à très grande vitesse ce type de matériaux, sans les délaminer, permet d'augmenter la productivité en diminuant le temps d'usinage. Pour cela l'invention propose un nouveau type de foret capable d'atteindre une énergie spécifique de coupe comprise entre 30 et 50W/cm³/min, comportant une partie active en matériau céramique et dont la géométrie est optimisée et adaptée au perçage à grande vitesse des matériaux composite. Ce nouveau type de foret est capable de supporter les efforts mécaniques engendrés par la matériau usiné à ces vitesses.

A cet effet, l'invention a pour objet un foret tel que décrit dans la revendication 1, comportant une queue, une partie taillée en forme de tronc de cône s'étendant jusqu'à la queue et dont la base est située au niveau d'une extrémité axiale libre du foret, ladite extrémité comportant au moins deux arêtes de coupe principales reliées entre elles par deux arêtes centrales, ladite partie taillée comportant deux lèvres et deux goujures s'étendant de façon hélicoïdale en alternance autour d'un axe longitudinal de rotation du foret, les lèvres et les goujures s'étendant depuis l'extrémité axiale libre vers la queue du foret, chaque lèvre comportant un listel et chaque goujure comportant une face de coupe principale adjacente à un listel et à une arête de coupe principale, laquelle arête forme une intersection avec une face de dépouille principale au niveau de l'extrémité axiale libre du foret, les faces de dépouille principales se prolongeant chacune, du côté des lèvres, par une face de contre-dépouille, deux piqûres s'étendant depuis les arêtes centrales vers la périphérie du foret et formant deux faces de coupe secondaires, au moins une portion d'extrémité de la partie taillée du foret étant réalisée en matériau céramique, ledit foret étant remarquable en ce que chaque listel se prolonge radialement, vers l'axe de rotation du foret, par un chanfrein incurvé, suivi d'une face de dépouille principale, de sorte que l'intersection entre chaque chanfrein incurvé et la goujure adjacente est formée par une arête dont une extrémité radialement externe est plus éloignée axialement, selon l'axe de rotation du foret, de la queue du foret que ne l'est une extrémité radialement interne de ladite arête, et en ce que les chanfreins incurvés se prolongent chacun, du côté des faces de contre-dépouille, par un chanfrein.

Ainsi, les faces de dépouille et de contre-dépouille de la tête du foret sont prolongées, radialement vers l'extérieur, par, respectivement, un premier chanfrein incurvé formant une surface de dépouille et par un second chanfrein formant une surface de contre-dépouille. L'incurvation vers l'intérieur des premier et second chanfreins permet d'éviter un délaminage du matériau composite percé par le foret.

L'invention concerne également un procédé de perçage de matériaux composites tel que décrit dans la revendication 12, au moyen d'un foret du type de celui décrit ci-dessus, procédé selon lequel le foret a une vitesse de coupe périphérique comprise entre 600 et 1000 m/min.

Avantageusement, le foret a une avance comprise entre 0,05 et 0,20 mm/tour.

Le perçage peut être effectué à sec, sans opération de centrage préalable. Une seule opération de perçage peut être suffisante pour réaliser le trou final.

La profondeur du perçage peut être supérieure au diamètre de la partie taillée du foret.

Préférentiellement, le matériau à percer est un matériau composite à fibres de carbone dont la matrice est une résine d'époxy.

L'invention sera mieux comprise et d'autres avantages de celle-ci apparaîtront plus clairement à la lumière de la description d'un mode préféré de réalisation et de variantes, donnée à titre d'exemple non limitatif et faite en référence aux dessins annexés, dans lesquels :
- la figure 1 est une vue schématique de côté d'un forêt selon l'invention,
- la figure 2 est une vue de détail de la partie taillée du foret représenté à la figure 1,
- la figure 3 est une vue de dessous du foret de la figure 1,
- la figure 4 est une vue de côté de la partie taillée du foret selon l'invention dans la direction E de la figure 2,
- la figure 5 est une vue similaire à la figure 2, illustrant un détail de réalisation du foret selon l'invention.

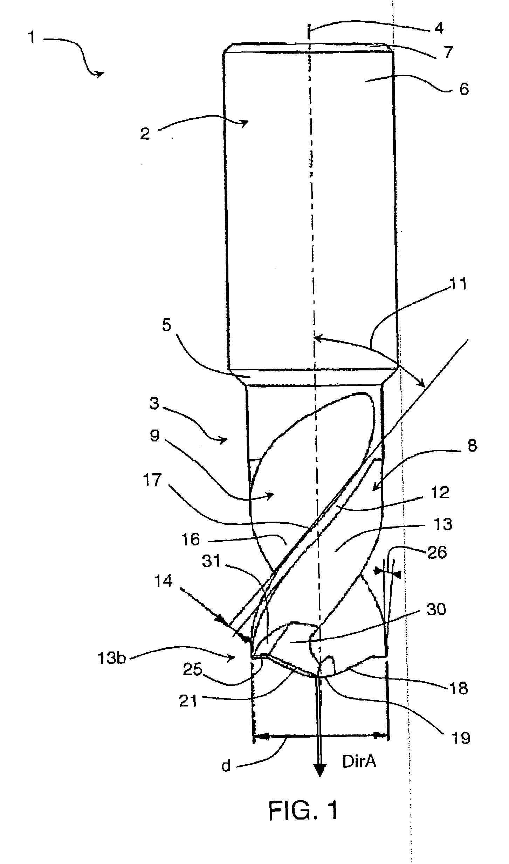

Les figures 1 à 5 représentent à titre d'exemple un foret monobloc en céramique pour perçage à grande vitesse de matériaux composites, en particulier de matériaux composites à fibres de carbone dont la matrice est une résine d'époxy.

Ce foret céramique 1 comporte (voir figure 1) une queue cylindrique 2 ou conique et une partie taillée 3 s'étendant depuis la queue dans l'axe 4 du foret jusqu'à une extrémité axiale libre 13b. La queue peut être lisse comme illustré ici ou comporter une rainure annulaire (non représentée) servant au bridage du foret dans le mandrin d'une machine-outil (non représentée). L'extrémité axiale libre 6 de la queue se termine par un chanfrein 7 pour faciliter son introduction dans le mandrin de la machine-outil. La queue 2 et la partie taillée 3 du foret 1 peuvent être raccordées entre elles par un chanfrein 5, nécessaire lorsque les diamètres extérieurs de la queue et de la partie taillée sont différents.

La partie taillée 3 du foret 1 comporte deux lèvres 8 et deux goujures 9, s'étendant en alternance autour de l'axe 4 depuis la queue 2 jusqu'à l'extrémité axiale libre 13b du foret 1. Les lèvres 8 et les goujures 9 sont enroulées de façon hélicoïdale autour de l'axe 4 avec un angle d'hélice 11 compris entre 25 et 40 degrés environ.

Chaque lèvre 8 comporte un listel 12, destiné à glisser contre la paroi interne d'un trou à percer, et une surface de dégagement 13. Les listels 12 et les surfaces de dégagement 13 sont de forme hélicoïdale. Selon l'invention, chaque listel a une épaisseur 14 qui est inférieure ou égale au dixième du diamètre d de la partie taillée 3 du foret. Chaque goujure 9 comporte une face de coupe principale 16, adjacente à un listel 12. L'intersection du listel 12 et de la face de coupe principale 16 forme une arête appelée bord d'attaque 17 du listel 12.

Au niveau de l'extrémité axiale libre 13b du foret 1, chaque listel 12 se prolonge radialement, de l'extérieur du foret 1 vers son axe 4, par un chanfrein incurvé 25, suivi d'une face de dépouille principale 21. L'intersection entre chaque face de dépouille principale 21 et la goujure 9 correspondante forme une arête de coupe principale 18. Les deux arêtes de coupe principales 18 se prolongent, au niveau de la partie centrale du foret, par deux arêtes centrales 19. Les faces de dépouille principales 21 se prolongent, du côté des lèvres 8, par une face de contre-dépouille 30.

Les faces de contre-dépouilles 30 présentent elles aussi un chanfrein 31, disposé dans le prolongement des chanfreins incurvés 25.

La direction de coupe et la direction d'avance du foret sont repérées respectivement DirC et DirA.

Soit A l'extrémité la plus éloignée de l'axe du foret d'une des arêtes de coupe principales 18. Afin que la description géométrique du foret selon l'invention soit la plus claire possible, les plans suivants sont définis :
- Pr : plan de référence du foret 1, correspondant au plan passant par A, orthogonal à la direction de coupe DC et contenant l'axe 4 du foret 1,
- Pf : plan de travail conventionnel du foret 1, correspondant au plan passant par A, orthogonal au plan de référence Pr, parallèle à la direction d'avance DA et parallèle à l'axe du foret 1,
- Pp : plan vers l'arrière du foret 1, correspondant au plan passant par A, orthogonal aux plans de référence Pr et de travail conventionnel Pf,
- Ps : plan d'arête du foret 1, correspondant au plan tangent à l'arête de coupe principale 18 au point A, perpendiculaire au plan de référence Pr,
- Pn : plan normal à l'arête de coupe principale 18, correspondant au plan perpendiculaire à l'arête de coupe principale 18 passant par A,
- Po : plan orthogonal du foret 1, correspondant au plan passant par A, perpendiculaire aux plans de référence Pr et d'arête Ps.

La géométrie du foret selon l'invention est telle que le plan orthogonal Po du foret est confondu avec le plan normal Pn à l'arête principale de coupe 18.

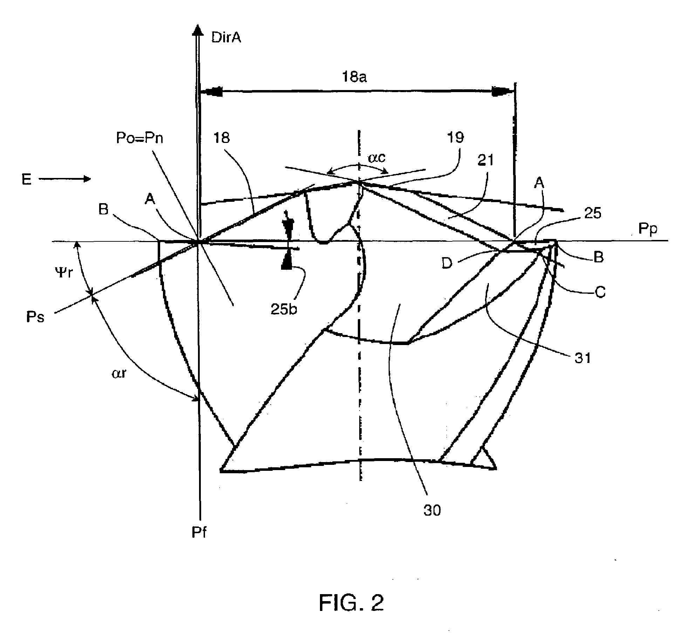

Dans le plan de référence Pr, correspondant à la vue de la figure 2, chaque plan d'arête Ps forme avec le plan de travail Pf un angle αr, appelé angle de direction de l'arête de coupe principale 18, compris entre 55 et 65 degrés environ. Par ailleurs, chaque plan d'arête Ps forme avec le plan vers l'arrière Pp correspondant un angle Ψr, appelé angle de direction complémentaire du foret 1, compris entre 27 et 37 degrés environ . Les deux arêtes centrales 19 forment entre elles un angle αc compris entre 142 et 162 degrés environ. Dans le plan Pr, l'arête formée par l'intersection entre un chanfrein incurvé 25 et la goujure 9 correspondante est inclinée d'un angle 25b par rapport au plan Pp, de telle sorte que le point B correspondant à l'extrémité radialement externe de cette arête soit plus éloigné de la queue 2 du foret que le point A. L'angle 25b est compris entre 3 et 9 degrés environ . Enfin, la distance 18a selon la direction radiale entre les points A de chaque arête de coupe principale 18 est comprise entre le diamètre d de la partie taillée 3 moins 2 mm et le diamètre d plus 2 mm.

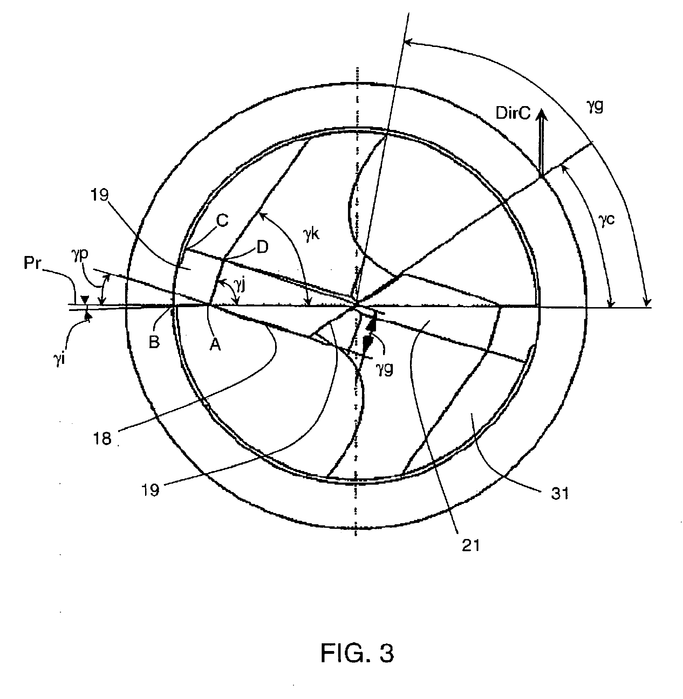

Dans le plan vers l'arrière Pp du foret 1, correspondant à la vue de la figure 3, chaque arête principale de coupe 18 forme un angle γp avec le plan de référence Pr. L'angle γp est appelé angle de coupe vers l'arrière du foret 1 et est compris entre 13 et 23 degrés environ . Dans ce plan, les faces de dépouille 21 ont une largeur 21b comprise entre 1 et 4 mm environ. Chaque arête centrale 19 forme avec le plan de référence Pr un angle γc compris entre 32 et 42 degrés environ . L'intersection entre chaque chanfrein incurvé 25 et le chanfrein 31 réalisé sur la face de contre-dépouille 30 correspondante forme un segment de droite dont les extrémités sont repérées C et D, C étant l'extrémité la plus éloignée de l'axe 4 du foret. Le segment de droite AB d'un chanfrein incurvé 25, B correspondant au quatrième sommet du chanfrein incurvé, forme avec le plan de référence Pr un angle γi compris entre 2 et 4 degrés environ . Le segment de droite AD forme avec le plan de référence Pr un angle γj compris entre 69 et 79 degrés environ. Par ailleurs, l'intersection entre chaque face de contre-dépouille 30 et le chanfrein 31 correspondant forme avec le plan de référence Pr un angle γk compris entre 50 et 60 degrés environ . Enfin, dans le plan Pp, la droite passant par l'axe 4 du foret et par l'intersection entre une goujure 9 et la surface de dégagement 13 correspondante forme, avec le plan Pr, un angle γg compris entre 60 et 90 degrés environ.

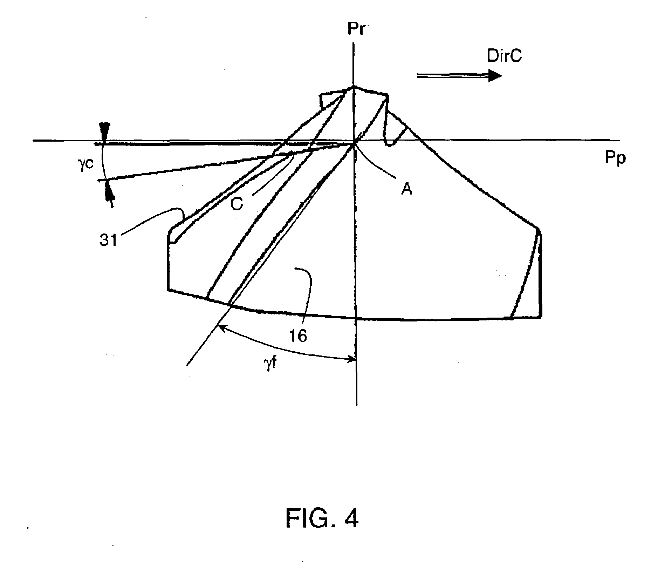

Dans le plan de travail Pf du foret 1, correspondant à la vue de la figure 4, chaque face de coupe principale 16 forme avec le plan de référence Pr un angle γf, appelé angle de coupe latéral du foret 1 Un angle positif ou négatif de coupe est déterminé par l'orientation de la face de coupe principale 16 par rapport à la direction de coupe DirC : lorsque la face de coupe est inclinée depuis l'arête de coupe vers la direction de coupe DirC, l'angle de coupe est dit négatif, et à l'inverse, lorsque la face de coupe 16 est inclinée depuis l'arête de coupe dans le sens inverse la direction de coupe DirC, l'angle de coupe γf est dit positif. Selon l'invention, l'angle de coupe γf du foret 1 est positif. Dans le plan Pf, chaque chanfrein incurvé 25 forme avec le plan vers l'arrière Pp du foret 1 un angle γe compris entre 6 et 10 degrés environ .

La partie taillée 3 du foret a une forme générale extérieure en tronc de cône. La base du tronc de cône est située au niveau de l'extrémité axiale libre 13b du foret et l'angle de conicité 26 de la partie taillée 3 peut aller jusqu'à 3 degrés environ.

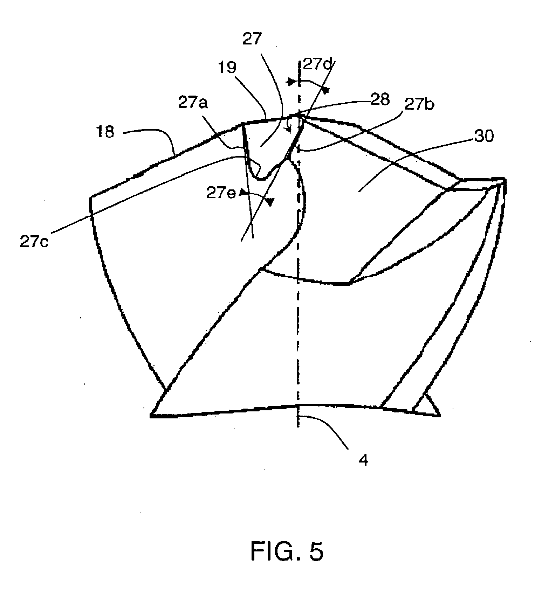

Deux faces de coupe secondaires 28, formées par la réalisation de deux piqûres 27 (figure 5), s'étendent depuis les arêtes centrales 19 vers la périphérie du foret 1. Les piqûres 27 sont délimitées par deux segments de droite : un premier segment de droite 27a partant de l'intersection entre une arête de coupe principale 18 et l'arête centrale 19 correspondante et un second segment de droite formant l'intersection entre la piqûre 27 et la face de contre-dépouille 30 adjacente. Les segments 27a et 27b sont reliés entre eux par une partie curviligne 27c. Dans le plan de référence Pr, le segment 27b forme un angle 27d par rapport à l'axe 4 du foret compris entre 1 et 15 degrés environ. Dans ce même plan, les segments 27a et 27b forment entre eux un angle 27e compris entre 25 et 35 degrés environ.

Les arêtes de coupe principales 18 et le bord d'attaque 17 de chaque listel 12 sont arrondis avec un rayon d'au moins 2 micromètres et pouvant aller jusqu'à 5 micromètres . Préférentiellement, ce rayon sera de l'ordre de 2 micromètres environ.

Pour fabriquer un foret selon l'invention, il n'est pas indispensable de connaître l'ensemble des caractéristiques géométriques mentionnées ci-dessus. A partir de certains angles caractéristiques, l'homme du métier, par exemple un fabriquant d'outils de coupe, saura déduire les autres caractéristiques, notamment grâce aux relations normalisées reliant les angles entre eux.

La géométrie du foret selon l'invention permet de réduire les efforts directement liés à la coupe tout en évitant le délaminage. Elle permet aussi de réduire les efforts résultant du frottement entre les listels 12 du foret et la paroi interne du trou à percer. Ainsi, le foret selon l'invention permet un perçage à très grande vitesse des matériaux composites car il résiste aux efforts importants produits dans ces conditions de perçage, tout en évitant le délaminage du matériau percé. Grâce à ce foret, il peut être de plus envisagé de percer des profondeurs supérieures au diamètre de l'outil sans que celui-ci ne s'use prématurément. Le délaminage du matériau composite est évité grâce à la présence des chanfreins incurvés 25. En effet, les extrémités radialement externes des chanfreins 25 usinant le matériau composite avant leurs extrémités radialement internes, les efforts appliqués par les chanfreins incurvés sur la matière à usiner sont globalement dirigés vers l'axe 4 du foret. Ainsi, la matière est prisonnière du foret, n'est pas repoussée vers l'extérieur et donc les différentes couches constitutives du matériau composite ne subissent pas d'effort tendant à les dissocier les unes des autres. Le délaminage du matériau est alors évité. La plage définie pour l'angle d'hélice 11 permet de loger sur la périphérie du foret 1 des goujures 9 suffisamment larges pour évacuer la quantité importante de copeaux produite lors de l'usinage à grande vitesse, sans diminuer la résistance du foret à la torsion. De plus, la présence de goujures 9 avec un angle d'hélice compris dans cette plage permet au foret selon l'invention de réaliser des perçages ayant une profondeur supérieure au diamètre du foret. Enfin, cette disposition, associée à la présence de l'angle αc entre les arêtes centrales 19 permettant un auto-centrage du foret 1, autorise la réalisation de perçages sans qu'une opération préliminaire de pointage soit nécessaire.

Comme illustré aux figures 1 à 5, le foret peut être monobloc, c'est à dire que la queue 2 et la partie taillée 3 sont réalisées dans le même matériau céramique et d'un seul tenant. Le foret peut être aussi composé de deux parties en matériaux différents, l'un pour la queue et l'autre pour la partie active, c'est à dire la partie taillée. La partie taillée du foret peut encore être composée de deux matériaux distincts : la partie proche de l'extrémité axiale libre du foret est alors en matériau céramique, tandis que la partie restante peut être dans le même matériau que la queue.

Le matériau constituant la partie active de la partie taillée est préférentiellement une céramique à base d'oxyde d'alumine renforcée par des fibres en carbure de silicium (SiC), ou à base de zircone, de nitrure de silicium (dite SiAION) ou est une céramique dite "mixte" renforcée ou non, une céramique mixte étant composée de zirconium et de nitrure de silicium.

Dans le cas d'un foret réalisé en deux parties, ces deux parties peuvent être liées entre elles par exemple par brasage. La partie taillée est alors en céramique tandis que la queue est réalisée dans un matériau de résilience supérieure à celle de la céramique pour mieux supporter les efforts appliqués sur le foret 1. Le matériau de la queue du foret peut par exemple être un carbure de tungstène.

Pour illustrer la présente invention, un exemple de mise en oeuvre a été réalisé sur une pièce en résine d'époxy renforcée de carbone avec un foret céramique dont la partie taillée coupante était en AI203 et dont les caractéristiques géométriques, hors tolérances de fabrication, étaient les suivantes :
- l'angle αr de direction des arêtes de coupe principales 18 était de 60°,
- l'angle Ψr de direction complémentaire du foret 1 était de 30°,
- l'angle αc entre les deux arêtes centrales 19 était de 152°,
- l'angle 25b formé par le segment reliant les points A et B et le plan Pp était de 6°,
- la distance 18a selon la direction radiale entre les points A de chaque arête de coupe principale 18 était de 12,7 mm,
- l'angle de coupe vers l'arrière γp était de 17,9°,
- la largeur 21 b des faces de dépouille 21 était de 2,1 mm,
- l'angle γc entre une arête centrale 19 et le plan de référence Pr était de 37,1°,
- l'angle γj entre le segment de droite AD et le plan de référence Pr était de 74°,
- l'angle γk formé entre l'intersection d'une face de contre-dépouille 30 et d'un chanfrein 31 et le plan de référence Pr était de 55°,
- l'angle γg formé entre, d'une part la droite passant par l'axe 4 du foret et l'intersection d'une goujure 9 et de la surface de dégagement 13 correspondante, et d'autre part par le plan Pp était de 80°,
- l'angle γe entre chaque chanfrein incurvé 25 et le plan Pp était de 8°
- l'angle γi entre chaque chanfrein 31 et le plan Pp était de 2,1°,
- l'angle 27d entre le segment 27b des piqûres 27 et l'axe 4 du foret était de 5°,
- l'angle 27e entre les segments 27a et 27b était de 30°
- l'angle de conicité 26 était de 1°,
- les arêtes de coupe principales 18 ainsi que le bord d'attaque 17 de chaque listel 12 étaient arrondis avec un rayon de 2 µm.

Le foret ainsi obtenu a permis de tester cette nouvelle géométrie et de confirmer les avantages qu'elle procure.

Le foret céramique 1 selon l'invention est particulièrement bien adapté au perçage de matériaux composites tels que des matériaux composites à fibres de carbone dont la matrice est une résine d'époxy. Son utilisation ne nécessite aucune adaptation particulière, notamment de la machine-outil, par rapport à l'utilisation d'un foret dont la partie active est en carbure de tungstène. Il est uniquement nécessaire que la machine-outil autorise des vitesses de rotation de l'outil suffisamment élevées et adaptées à l'usinage à grande vitesse. La plage d'utilisation du foret en terme de vitesse de coupe et d'avance peut être déterminée par une approche du type Coupe Outil Matière (COM). Pour des matériaux composites, le foret selon l'invention permet d'atteindre, en fonction du diamètre du foret, une vitesse de coupe périphérique comprise entre 600 et 1000 m/min, pour une avance comprise entre 0,05 et 0,20 mm/tour, sans user prématurément le foret ni délaminer le matériau à percer. Pour ces vitesses, le foret selon l'invention permet de réduire considérablement les contraintes s'exerçant sur ce dernier, qu'elles soient mécaniques (efforts de torsion et de compression) ou thermiques. Les contraintes thermiques sont diminuées en assurant une dissipation de la chaleur via les copeaux qui véhiculent rapidement cette énergie en dehors du perçage. L'utilisation du foret en dehors des plages de vitesse de coupe et d'avance préconisées est possible mais entraîne une dégradation accélérée de l'outil et donc une diminution de sa durée de vie. Le foret selon l'invention permet, pour le perçage de matériaux composites, de diviser le temps de perçage par dix. L'impact de la géométrie du foret sur sa durée de vie est notable puisque le nombre de trous percés par le même outil avant qu'il soit nécessaire d'en changer est multiplié par cinq.

Selon une autre caractéristique de l'invention, le perçage est effectué à sec sans utilisation de lubrifiant et constitue une opération d'ébauche ne nécessitant pas d'opération de pointage préalable pour le centrage du foret.

Suivant l'état de surface requis et suivant les caractéristiques métallurgiques requises en périphérie immédiate du trou, une seule opération de perçage, sans opération de pointage préalable et sans opération ultérieure de finition, est suffisante pour réaliser le trou final.

Compte tenu des vitesses de coupe et des avances élevées qui peuvent être atteintes grâce au foret selon l'invention, seules des machines spécifiques destinées à l'usinage grande vitesse et suffisamment rigides sont à même de donner un résultat pleinement satisfaisant en terme de qualité de perçage et de durée de vie de l'outil.

## Revendications

1. Foret comportant une queue (2), une partie taillée (3) en forme de tronc de cône s'étendant jusqu'à la queue (2) et dont la base est située au niveau d'une extrémité axiale libre (13b) du foret, ladite extrémité (13b) comportant au moins deux arêtes de coupe principales (18) reliées entre elles par deux arêtes centrales (19), ladite partie taillée (3) comportant deux lèvres (8) et deux goujures (9) s'étendant de façon hélicoïdale en alternance autour d'un axe longitudinal (4) de rotation du foret, les lèvres (8) et les goujures (9) s'étendant depuis l'extrémité axiale libre (13b) vers la queue (2) du foret, chaque lèvre (8) comportant un listel (12) et chaque goujure (9) comportant une face de coupe principale (16) adjacente à un listel (12) et à une arête de coupe principale (18), laquelle arête (18) forme une intersection avec une face de dépouille principale (21) au niveau de l'extrémité axiale libre (13b) du foret, les faces de dépouille principales (21) se prolongeant chacune, du côté des lèvres (8), par une face de contre-dépouille (30), deux piqûres (27) s'étendant depuis les arêtes centrales (19) vers la périphérie du foret et formant deux faces de coupe secondaires (28), au moins une portion d'extrémité de la partie taillée (3) du foret étant réalisée en matériau céramique, ledit foret étant **caractérisé en ce que** chaque listel (12) se prolonge radialement, vers l'axe de rotation (4) du foret, par un chanfrein incurvé (25), suivi d'une face de dépouille principale (21), de sorte que l'intersection entre chaque chanfrein incurvé (25) et la goujure (9) adjacente est formée par une arête (AB) dont une extrémité radialement externe (B) est plus éloignée axialement, selon l'axe de rotation (4) du foret, de la queue (2) du foret que ne l'est une extrémité radialement interne (A) de ladite arête (AB), et **en ce que** les chanfreins incurvés (25) se prolongent chacun, du côté des faces de contre-dépouille (30), par un chanfrein (31).

2. Foret selon la revendication 1, **caractérisé en ce que** les lèvres (8) et les goujures (9) sont enroulées hélicoïdalement autour de l'axe de rotation (4) du foret avec un angle d'hélice (11) compris entre 25 et 40 degrés par rapport à l'axe de rotation (4) du foret.

3. Foret selon la revendication 1 ou 2, **caractérisé en ce que** l'angle de conicité (26) de la partie taillée (3) est compris entre 1 et 3 degrés.

4. Foret selon l'une quelconque des revendications 1 à 3, **caractérisé en ce que** chaque listel (12) a une épaisseur (14) inférieure ou égale au dixième du diamètre (d) de la base de la partie taillée (3).

5. Foret selon l'une quelconque des revendications 1 à 4, **caractérisé en ce que** chaque face de coupe principale (16) est inclinée depuis l'arête de coupe principale (18) adjacente vers la direction de coupe (DirC) du foret.

6. Foret selon l'une quelconque des revendications 1 à 5, **caractérisé en ce que** la distance (18a) séparant, selon la direction radiale, les extrémités radialement externes (A) des deux arêtes de coupe principales (18), est égale, à plus ou moins 2 mm, au diamètre (d) de la base de la partie taillée (3).

7. Foret selon l'une quelconque des revendications 1 à 6, **caractérisé en ce que** les deux arêtes centrales (19) forment entre elles un angle (αc) compris entre 142 et 162 degrés.

8. Foret selon l'une quelconque des revendications 1 à 7, **caractérisé en ce que** l'arête (AB) formant l'intersection entre un chanfrein incurvé (25) et la goujure (9) adjacente est inclinée d'un angle (25b) compris entre 3 et 9 degrés par rapport à un plan (Pp) normal à l'axe de rotation (4) du foret.

9. Foret selon l'une quelconque des revendications 1 à 8, où
- est appelée A l'extrémité radialement externe de chaque arête de coupe principale (18),
- est appelé Pr un plan de référence passant par le point A, orthogonal à la direction de coupe (DirC) du foret et contenant l'axe de rotation (4) du foret,
- est appelé Pf un plan passant par le point A, orthogonal au plan Pr, parallèle à la direction d'avance (DirA) du foret, et parallèle à l'axe de rotation (4) du foret,
- est appelé Pp un plan passant par le point A, orthogonal aux plans Pr et Pf,
ledit foret étant **caractérisé en ce qu'**un plan (Ps), tangent à une arête de coupe principale (18) au point A et perpendiculaire au plan de référence Pr, forme avec le plan Pf un angle (αr) compris entre 55 et 65 degrés.

10. Foret selon la revendication 9, **caractérisé en ce que**, pour chaque lèvre (8), dans le plan Pp, la droite passant par l'axe (4) du foret et l'intersection entre une goujure (9) et la surface de dégagement (13) correspondante forme avec le plan Pr un angle (γg) compris entre 60 et 90 degrés.

11. Foret selon la revendication 9 ou 10, **caractérisé en ce que**, pour chaque lèvre (8), dans le plan Pr, chaque piqûre (27) est délimitée par un premier segment de droite (27a) partant de l'intersection entre une arête de coupe principale (18) et l'arête centrale (19) adjacente, un second segment de droite (27b) formant l'intersection entre la piqûre (27) et la face de contre-dépouille (30) adjacente, les premier (27a) et second (27b) segment de droite étant reliés entre eux par une partie curviligne (27c), le second segment de droite (27b) étant incliné par rapport à l'axe de rotation (4) du foret d'un angle (27d) compris entre 1 et 15 degrés, et les premier (27a) et second (27b) segments de droite formant entre eux un angle (27e) compris entre 25 et 35 degrés.

12. Procédé de perçage de matériaux composites au moyen d'un foret selon l'une quelconque des revendications 1 à 11, **caractérisé en ce que** le foret a une vitesse de coupe périphérique comprise entre 600 et 1000 m/min.

13. Procédé de perçage selon la revendication 12, **caractérisé en ce que** le foret a une avance comprise entre 0,05 et 0,20 mm/tour.

14. Procédé de perçage selon la revendication 12 ou 13, **caractérisé en ce que** le perçage est effectué à sec.

15. Procédé de perçage selon l'une quelconque des revendications 12 à 14, **caractérisé en ce que** le perçage est réalisé sans opération de centrage préalable.

16. Procédé de perçage selon l'une quelconque des revendications 12 à 15, **caractérisé en ce qu'**une seule opération de perçage est suffisante pour réaliser le trou final.

17. Procédé de perçage selon l'une quelconque des revendications 12 à 16, **caractérisé en ce que** la profondeur du perçage est supérieure au diamètre de la partie taillée (3) du foret.

18. Procédé de perçage selon l'une quelconque des revendications 12 à 17, **caractérisé en ce que** le matériau à percer est un matériau composite à fibres de carbone dont la matrice est une résine d'époxy.

## Claims

1. A drill bit comprising a shank (2), a body (3) in the form of a truncated cone extending as far as the shank (2) and the base of which is located at a free axial end (13b) of the drill bit, said end (13b) having at least two main cutting edges (18) joined together by two central edges (19), said body (3) having two fluted lands (8) and two flutes (9) extending in a helical fashion alternately around a longitudinal rotation axis (4) of the drill bit, the fluted lands (8) and the flutes (9) extending from the free axial end (13b) to the shank (2) of the drill bit, each fluted land (8) having a margin (12) and each flute (9) having a main cutting face (16) adjacent a margin (12) and adjacent a main cutting edge (18), said main cutting edge (18) forming an intersection with a flank face (21) at the free axial end (13b) of the drill bit, the flank faces (21) each being extended, on the side with the fluted lands (8), by a rake face (30), two recesses (27) extending from the central edges (19) to the periphery of the drill bit and forming two secondary cutting faces (28), at least one end portion of the body (13) of the drill bit being made of a ceramic, **characterised in that** each land (12) is radially extended, toward the rotation axis (4) of the drill bit, by a curved bevel (25), followed by a flank face (21), such that the intersection between each curved bevel (25) and the adjacent flute (9) is formed by an edge (AB) whose radially external end (B) is further away axially, along the rotation axis (4) of the drill bit, from the shank (12) of the drill bit than a radially internal end (A) of said edge (AB), and **in that** the curved bevels (25) are each extended, on the side with the rake faces (30), by a bevel (31).

2. A drill bit according to claim 1, **characterised in that** the fluted lands (8) and the flutes (9) wind helically around the rotation axis (4) of the drill bit with a helix angle (11)of between 25° and 40° with the rotation axis (4) of the drill bit.

3. A drill bit according to claim 1 or 2, **characterised in that** the conicity angle (26) of the body (3) is between 1° and 3°.

4. A drill bit according to any one of claims 1 to 3, **characterised in that** each land (12) has a thickness (14) equal to or less than one tenth of the diameter (d) of the base of the body (3).

5. A drill bit according to any one of claims 1 to 4, **characterised in that** each main cutting face (16) is inclined from the adjacent main cutting edge (18) toward the cutting direction (DirC) of the drill bit.

6. A drill bit according to any one of claims 1 to 5, **characterised in that** the distance (18a) separating, along the radial direction, the radially external ends (A) of the two main cutting edges (18), is equal, to plus or minus 2 mm, to the diameter (d) of the base of the body (3).

7. A drill bit according to any one of claims 1 to 6, **characterised in that** the two central edges (19) make between them an angle ( αc) of between 142° and 162°.

8. A drill bit according to any one of claims 1 to 7, **characterised in that** the edge (AB) forming the intersection between a curved bevel (25) and the adjacent flute (9) is inclined at an angle (25b) of between 3° and 9° to a plane (P) normal to the rotation axis (4) of the drill bit.

9. A drill bit according to any one of claims 1 to 8, in which
- the radially external end of each main cutting edge (18) is named A;
- a reference plane passing through point A, orthogonal to the cutting direction (DirC)of the drill bit and containing the rotation axis (4) of the drill bit, is named Pr;
- a plane passing through point A, orthogonal to the plane Pr, parallel to the feed direction (DirA) of the drill bit, and parallel to the rotation axis (4) of the drill bit, is named Pf; and
- a plane passing through point A, orthogonal to the planes Pr and Pf, is named Pp,
**characterised in that** a plane Ps tangential to the main cutting edge (18) at point A, and perpendicular to the reference plane Pr, makes an angle (αr) of between 55° and 65° with the plane Pf.

10. A drill bit according to claim 9, **characterised in that**, for each fluted land (8), in the plane Pp, the straight line passing through the axis (4) of the drill bit and the intersection between a flute (9) and the corresponding clearance surface (13) makes an angle (γg) of between 60° and 90° with the plane Pr.

11. A drill bit according to claim 9 or 10, **characterised in that**, for each fluted land (8), in the plane Pr, each recess (27) is bounded by a first straight segment (27a) starting from the intersection between a main cutting edge (18) and the adjacent central edge (19) and by a second straight segment (27b) forming the intersection between the recess (27) and the adjacent rake face (30), the first (27a) and second (27b) straight segments being joined together by a curvilinear part (27c), the second straight segment (27b) being inclined to the rotation axis (4) of the drill bit by an angle of between 1° and 15° and the first (27a) and second (27b) straight segments making between them an angle (27e) of between 25° and 35°.

12. A method of drilling composites by means of a drill bit according to any one of claims 1 to 11, **characterised in that** the drill bit has a peripheral cutting speed of between 600 and 1000 m/min.

13. A method according to claim 12, **characterised in that** the drill bit is advanced at between 0.05 and 0.20 mm/revolution.

14. A method according to claim 12 or 13, **characterised in that** the drilling is carried out dry.

15. A method according to any one of claims 12 to 14, **characterised in that** the drilling is carried out without a prior centering operation.

16. A method according to any one of claims 12 to 15, **characterised in that** a single drilling operation is sufficient to produce the final hole.

17. A method according to any one of claims 12 to 16, **characterised in that** the depth of the drillhole is greater than the diameter of the body (3) of the drill bit.

18. A method according to any one of claims 12 to 17, **characterised in that** the material to be drilled is a carbon-fiber composite having an epoxy resin matrix.

## Patentansprüche

1. Bohrer mit einem Schaft (2), einer kegelstumpfförmigen Spitze (3), die sich bis zu dem Schaft (2) erstreckt und deren Basis im Bereich eines freien axialen Endes (13b) des Bohrers liegt, wobei das Ende (13b) wenigstens zwei Hauptschneidkanten (18) aufweist, die durch zwei Zentrumsschneiden (19) untereinander verbunden sind, wobei die Spitze (3) zwei Schneiden (8) und zwei Spannuten (9) aufweist, die sich wendelförmig abwechselnd um eine Rotationslängsachse (4) des Bohrers erstrecken, wobei die Schneiden (8) und die Spannuten (9) von dem freien axialen Ende (13b) aus zum Schaft (2) des Bohrers verlaufen, wobei jede Schneide (8) eine Führungsfase (12) und jede Spannut (9) eine Hauptspanfläche (16) aufweist, die einer Führungsfase (12) und einer Hauptschneidkante (18) benachbart ist, wobei die Schneidkante (18) mit einer Hauptfreifläche (21) im Bereich des freien axialen Endes (13b) des Bohrers einen Schnittpunkt bildet, wobei die Hauptfreiflächen (21) auf der Seite der Schneiden (8) jeweils durch eine Hinterschneidungsfläche (30) fortgesetzt sind, wobei zwei Grübchen (27) von den Zentrumsschneiden (19) zum Umfang des Bohrers verlaufen und zwei Nebenspanflächen (28) bilden, wobei wenigstens ein Endabschnitt der Spitze (3) des Bohrers aus Keramikwerkstoff gefertigt ist, wobei der Bohrer **dadurch gekennzeichnet ist, daß** jede Führungsfase (12) in Richtung der Rotationsachse (4) des Bohrers radial durch eine gekrümmte Fase (25) fortgesetzt ist, an die sich eine Hauptfreifläche (21) anschließt, so daß der Schnittpunkt zwischen jeder gekrümmten Fase (25) und der benachbarten Spannut (9) von einer Kante (AB) gebildet ist, von welcher ein radial äußeres Ende (B) entlang der Rotationsachse (4) des Bohrers von dem Schaft (2) des Bohrers axial weiter entfernt ist als ein radial inneres Ende (A) der Kante (AB), und daß die gekrümmten Fasen (25) auf der Seite der Hinterschneidungsflächen (30) jeweils durch eine Fase (31) fortgesetzt sind.

2. Bohrer nach Anspruch 1, **dadurch gekennzeichnet, daß** die Schneiden (8) und die Spannuten (9) um die Rotationsachse (4) des Bohrers herum wendelförmig mit einem Steigungswinkel (11) zwischen 25 und 40 Grad gegenüber der Rotationsachse (4) des Bohrers gewickelt sind.

3. Bohrer nach Anspruch 1 oder 2, **dadurch gekennzeichnet, daß** der Konuswinkel (26) der Spitze (3) zwischen 1 und 3 Grad beträgt.

4. Bohrer nach einem der Ansprüche 1 bis 3, **dadurch gekennzeichnet, daß** jede Führungsfase (12) eine Dicke (14) aufweist, die kleiner als das oder gleich dem Zehntel des Durchmessers (d) der Basis der Spitze (3) ist.

5. Bohrer nach einem der Ansprüche 1 bis 4, **dadurch gekennzeichnet, daß** jede Hauptspanfläche (16) von der benachbarten Hauptschneidkante (18) zur Schneidrichtung (DirC) des Bohrers geneigt ist.

6. Bohrer nach einem der Ansprüche 1 bis 5, **dadurch gekennzeichnet, daß** der Abstand (18a), der in radialer Richtung die radial äußeren Enden (A) der beiden Hauptschneidkanten (18) voneinander trennt, bis auf mehr oder weniger 2 mm gleich dem Durchmesser (d) der Basis der Spitze (3) ist.

7. Bohrer nach einem der Ansprüche 1 bis 6, **dadurch gekennzeichnet, daß** die beiden Zentrumsschneiden (19) einen Winkel (αc) zwischen 142 und 162 Grad einschließen.

8. Bohrer nach einem der Ansprüche 1 bis 7, **dadurch gekennzeichnet, daß** die Kante (AB), welche den Schnittpunkt zwischen einer gekrümmten Fase (25) und der benachbarten Spannut (9) bildet, um einen Winkel (25b) zwischen 3 und 9 Grad gegenüber einer zur Rotationsachse (4) des Bohrers normalen Ebene (Pp) geneigt ist.

9. Bohrer nach einem der Ansprüche 1 bis 8, wobei
- das radial äußere Ende jeder Hauptschneidkante (18) mit A bezeichnet wird,
- eine Bezugsebene, die durch den Punkt A verläuft, zur Schneidrichtung (DirC) des Bohrers orthogonal ist und die Rotationsachse (4) des Bohrers enthält, mit Pr bezeichnet wird,
- eine Ebene, die durch den Punkt A verläuft, zur Ebene Pr orthogonal ist, zur Vorschubrichtung (DirA) des Bohrers parallel verläuft und zur Rotationsachse (4) des Bohrers parallel ist, mit Pf bezeichnet wird,
- eine durch den Punkt A verlaufende Ebene, die zu den Ebenen Pr und Pf orthogonal ist, mit Pp bezeichnet wird,
wobei der Bohrer **dadurch gekennzeichnet ist, daß** eine Ebene (Ps), welche eine Hauptschneidkante (18) im Punkt A tangiert und zur Bezugsebene Pr senkrecht ist, mit der Ebene Pf einen Winkel (αr) zwischen 55 und 65 Grad bildet.

10. Bohrer nach Anspruch 9, **dadurch gekennzeichnet, daß** bei jeder Schneide (8), in der Ebene Pp, die durch die Achse (4) des Bohrers und den Schnittpunkt zwischen einer Spannut (9) und der entsprechenden Freifläche (13) verlaufende Gerade mit der Ebene Pr einen Winkel (γg) zwischen 60 und 90 Grad bildet.

11. Bohrer nach Anspruch 9 oder 10, **dadurch gekennzeichnet, daß** für jede Schneide (8), in der Ebene Pr, jedes Grübchen (27) durch einen ersten Geradenabschnitt (27a), der von dem Schnittpunkt zwischen einer Hauptschneidkante (18) und der benachbarten Zentrumsschneide (19) ausgeht, durch einen zweiten Geradenabschnitt (27b), der den Schnittpunkt zwischen dem Grübchen (27) und der benachbarten Hinterschneidungsfläche (30) bildet, begrenzt ist, wobei der erste Geradenabschnitt (27a) und der zweite Geradenabschnitt (27b) durch einen gekrümmten Teil (27c) verbunden sind, wobei der zweite Geradenabschnitt (27b) gegenüber der Rotationsachse (4) des Bohrers um einen Winkel (27d) zwischen 1 und 15 Grad geneigt ist, und wobei der erste Geradenabschnitt (27a) und der zweite Geradenabschnitt (27b) einen Winkel (27e) zwischen 25 und 35 Grad einschließen.

12. Verfahren zum Bohren von Verbundwerkstoffen mit Hilfe eines Bohrers nach einem der Ansprüche 1 bis 11, **dadurch gekennzeichnet, daß** der Bohrer eine Umfangsschnittgeschwindigkeit von 600 bis 1000 m/Min. aufweist.

13. Bohrverfahren nach Anspruch 12, **dadurch gekennzeichnet, daß** der Bohrer einen Vorschub aufweist, der zwischen 0,05 und 0,20 mm/U liegt.

14. Bohrverfahren nach Anspruch 12 oder 13, **dadurch gekennzeichnet, daß** das Bohren trocken durchgeführt wird.

15. Bohrverfahren nach einem der Ansprüche 12 bis 14, **dadurch gekennzeichnet, daß** das Bohren ohne vorherigen Zentrierschritt durchgeführt wird.

16. Bohrverfahren nach einem der Ansprüche 12 bis 15, **dadurch gekennzeichnet, daß** ein einziger Bohrvorgang ausreicht, um das fertige Loch auszubilden.

17. Bohrverfahren nach einem der Ansprüche 12 bis 16, **dadurch gekennzeichnet, daß** die Tiefe der Bohrung größer als der Durchmesser der Spitze (3) des Bohrers ist.

18. Bohrverfahren nach einem der Ansprüche 12 bis 17, **dadurch gekennzeichnet, daß** der zu bohrende Werkstoff ein Kohlenstoffaser-Verbundwerkstoff ist, dessen Matrix ein Epoxydharz ist.
